(19) Europäisches Patentamt
European Patent Office
Office européen des brevets

(11) **EP 3 820 758 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **19734024.3**

(22) Anmeldetag: **24.06.2019**

(51) Internationale Patentklassifikation (IPC):
**B61L 1/06** (2006.01)   **B61L 23/04** (2006.01)
**G01H 9/00** (2006.01)

(52) Gemeinsame Patentklassifikation (CPC):
**B61L 1/06; B61L 23/042; G01H 9/004**

(86) Internationale Anmeldenummer:
**PCT/EP2019/066588**

(87) Internationale Veröffentlichungsnummer:
**WO 2020/011517 (16.01.2020 Gazette 2020/03)**

(54) **VERFAHREN UND SYSTEM ZUM ÜBERWACHEN EINER GLEISSTRECKE**

METHOD AND SYSTEM FOR MONITORING A TRACK SECTION

PROCÉDÉ ET SYSTÈME DE SURVEILLANCE D'UNE VOIE FERRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2018 AT 2042018**

(43) Veröffentlichungstag der Anmeldung:
**19.05.2021 Patentblatt 2021/20**

(73) Patentinhaber:
• **Plasser & Theurer Export von Bahnbaumaschinen GmbH**
**1010 Wien (AT)**
• **Frauscher Sensortechnik GmbH**
**4774 St. Marienkirchen (AT)**

(72) Erfinder:
• **WILCZEK, Krzysztof**
**1020 Wien (AT)**

• **AUER, Florian**
**1010 Wien (AT)**
• **KOPF, Fritz**
**1140 Wien (AT)**
• **ROSENBERGER, Martin**
**4773 Eggerding (AT)**
• **HUBER, Stefan**
**94157 Perlesreut (DE)**
• **LANCASTER, Gavin**
**4792 Münzkirchen (AT)**
• **ZEILINGER, Rene**
**4782 Sankt Florian am Inn (AT)**

(56) Entgegenhaltungen:
**EP-A1- 3 339 819      WO-A2-2014/019886**
**US-A1- 2016 334 543**

EP 3 820 758 B1

**Beschreibung**

Gebiet der Technik

Die Erfindung betrifft ein Verfahren zum Überwachen einer Gleisstrecke mittels einer Überwachungseinrichtung, die mit einem sich entlang der Gleisstrecke erstreckenden Sensor verbunden ist, wobei der in Vibration versetzte Sensor Messdaten für die Überwachungseinrichtung liefert. Zudem betrifft die Erfindung ein System zur Durchführung des Verfahrens.

Stand der Technik

Entlang von Gleisstrecken sind diverse Überwachungseinrichtungen verbaut, um den Eisenbahnverkehr, die Bahninfrastruktur und sonstige Aktivitäten am Gleis zu überwachen. Dazu zählen beispielsweise Achszählsysteme, die als Gleisfreimeldeeinrichtungen im Einsatz sind. Weitere bekannte Überwachungseinrichtungen sind Videosysteme, Temperatursensoren etc. Zudem können entlang einer Gleisstrecke verlegte Kabel bzw. Leitungen als Komponenten eines Überwachungssystems genutzt werden.
Beispielsweise ist aus der EP 3 275 763 A1 eine Überwachungseinrichtung bekannt, die an einen neben dem Gleis verlegten Lichtwellenleiter angeschossen ist. Diese Überwachungseinrichtung erfasst Vibrationen bzw. Körperschall entlang der Gleisstrecke. Konkret werden Reflexionen von Laserimpulsen in einer Glasfaser des Lichtwellenleiters detektiert. Diese Reflexionen verändern sich, wenn Schallwellen auf den Lichtwellenleiter treffen. Beispielsweise wird ein kohärenter Laserimpuls in einer zuvor definierten Frequenz in eine Monomodefaser gesendet. Natürliche Einschlüsse innerhalb der Faser reflektieren Teile dieses Laserimpulses zurück zur Quelle (Rückstreuung). Speziell entwickelte Algorithmen ermöglichen auf Basis einer Rückstreuungskomponente Rückschlüsse auf Ort und Beschaffenheit einer Vibrationsquelle entlang der Gleisstrecke.
Dabei besteht die Schwierigkeit, dass die Vibrationsübertragung von einer Vibrationsquelle auf den Lichtwellenleiter von vielen unbekannten Einflüssen abhängt. Gewöhnlich ist der Lichtwellenleiter in einem Kabeltrog verlegt, der nicht immer parallel zum Gleis verläuft. Zudem sind Kabelschlaufen vorgesehen, um bei Bedarf einen Längenausgleich durchführen zu können. Somit weicht auf einem überwachten Gleisabschnitt die Lichtwellenleiterlänge in der Regel von der Länge der Gleisstrecke ab. Auch ein ortsabhängiger Aufbau des Bodens und der Gleisbettung beeinflusst die Vibrationsübertragung erheblich.
Um diese Schwierigkeiten zu überwinden werden beispielsweise Ausgangssignale eines am Gleis angeordneten Positionssensors (z.B. Achszähler) gemeinsam mit den detektierten Lichtreflexionen in der Glasfaser ausgewertet. Durch die Kombination dieser beiden Messergebnisse kann die Position eines Gleisfahrzeugs über die gesamte Gleisstrecke hinreichend bestimmt werden, wobei die ungefähre Position zwischen den Positionssensoren aus den detektierten Lichtreflexionen der Glasfaser abgeleitet wird. Auch bei parallel verlaufenden Gleisen liefern die Positionssensoren eine verlässliche Zuordnung des momentan befahrenen Gleises.
Aus der US 2016/0334543 A1 ist eine Lösung bekannt, bei der ein Reflexionssignal eines entlang einer Gleisstrecke verlegten Lichtwellenleiters mittels eines vorgegebenen Basissignals kalibriert wird. Dieses Basissignal wird von einer auf der Gleisstrecke befindlichen Kontrolleinrichtung erzeugt und in einer Auswerteeinrichtung detektiert. Auftretende Veränderungen bei der Detektion des Basissignals werden genutzt, um alle von der Auswerteeinrichtung detektierte Signale anzupassen. Die angepassten Signale werden mit bekannten Signalmustern verglichen, um auf dem Gleis befindliche Objekte zu erkennen und zu überwachen. Für die Signalauswertung ist somit eine laufende Detektion des Basissignals erforderlich.
In der WO 2014/019886 A2 ist eine Ortungseinrichtung für Schienenfahrzeuge mittels eines entlang einer Gleisstrecke verlegten Wellenleiters offenbart. Dabei wird eine an einer bekannten Position befindliche Erschütterungseinrichtung genutzt, um zu einem vorgegebenen Aktivierungszeitpunkt eine Erschütterung hervorzurufen. Durch Auswertung eines mittels des Wellenleiters gemessenen Rückstreumusters wird die Ortungseinrichtung kalibriert. Die EP 3 339 819 A1 offenbart ein Verfahren und ein System zum Kalibrieren einer Überwachungseinrichtung, die einen entlang eines Objekts verlaufenden Sensors umfasst. Dabei werden Messungen der Überwachungseinrichtung und einer Referenzmesseinrichtung abgeglichen, um einen Kalibrierparameter anzupassen.

Zusammenfassung der Erfindung

Der Erfindung liegen die Aufgaben zugrunde, für ein Verfahren und ein System der eingangs genannten Art Verbesserungen gegenüber dem Stand der Technik anzugeben.
Erfindungsgemäß werden diese Aufgaben gelöst durch die Merkmale der Ansprüche 1 und 7. Abhängige Ansprüche geben vorteilhafte Ausgestaltungen der Erfindung an.
Dabei wird die Gleisstrecke mit einem Schienenfahrzeug befahren, wobei Vibrationen mit bekannten Vibrationswerten in die Gleisstrecke eingebracht und auf den Sensor übertragen werden. Zudem werden Positionsdaten des Schienenfahrzeugs erfasst, wobei mittels einer Auswerteeinrichtung aus den bekannten Vibrationswerten, den Positionsdaten und den Messdaten für die Gleisstrecke eine Charakteristik der Vibrationsübertragung abgeleitet wird. Als bekannte Vibrationswerte gelten dabei ganz allgemein eingestellte Parameter oder erfasste Messwerte, welche die eingebrachten Vibrationen kennzeichnen. Auf diese Weise erfolgt mit einem einmaligen Befahren der Gleisstrecke eine Kalibrierung des Systems. Konkret wird mittels der bekannten Vibrationsemissionen und der Positionsdaten für jede Stelle der Gleisstrecke ermittelt, wie sich die lokal vorliegenden Verhältnisse auf die Sensormessdaten auswirken. Relevant sind dabei insbesondere dämpfende oder schallreflektierende Elemente zwischen Vibrationsquelle und Sensor. Für nachfolgende Messungen werden diese Ergebnisse in die Auswertung der Sensormessdaten mit einbezogen. Somit entfällt die Notwendigkeit weiterer entlang des Gleises angeordneter Sensoren, um eine genaue Ortung von Schall- bzw. Vibrationsquellen am überwachten Gleisabschnitt vorzunehmen.

Erfindungsgemäß ist vorgesehen, dass die Charakteristik der Vibrationsübertragung als eine Übertragungsfunktion in der Überwachungseinrichtung abgespeichert wird. Damit ist eine genaue und schnelle Auswertung der Sensormessdaten durchführbar, wobei die Übertragungsfunktion für verschiedene Anwendungsfälle optimierbar ist. Beispielsweise können bestimmte Vibrationsfrequenzen gefiltert werden, wenn diese für spezielle Auswertung keine Relevanz haben.

Vorteilhafterweise werden die Messdaten aus Signaldaten eines Lichtwellenleiters abgeleitet, insbesondere mittels verteilter akustischer Erfassung über mindestens eine Lichtleiterfaser. Mittels der sogenannten verteilten akustischen Erfassung (Distributed Acoustic Sensing, DAS) wird der Lichtwellenleiter als virtuelles Mikrofon nutzbar. Dazu sind lediglich minimale Arbeiten an den Enden einer Lichtleiterfaser nötig, wobei auch bereits in Gleisanlagen verlegte Lichtwellenleiter genutzt werden können. Gewöhnlich sind in solchen Lichtwellenleitern stets einzelne Fasern frei verfügbar für die vorliegende Anwendung.

Für eine Offline-Verarbeitung der Daten ist es vorteilhaft, wenn ein Zeitgeber des Schienenfahrzeugs und ein Zeitgeber der Überwachungseinrichtung synchronisiert werden und wenn die erfassten Daten zeitbezogen abgespeichert werden. Damit sind die Daten des Schienenfahrzeugs und die Daten der Überwachungseinrichtung über die Zeit verknüpft, sodass die Auswertung mittels der Auswerteeinrichtung nach einer Befahrung der Gleisstrecke durchführbar ist.

Die Position des Schienenfahrzeugs wird günstigerweise mittels eines GNSS-Empfängers erfasst. Ein solches Gerät zur satellitengestützten Positionsbestimmung ist oftmals bereits vorhanden und kann für das vorliegende Verfahren mitgenutzt werden.

Von Vorteil ist es zudem, wenn die Vibrationen mittels eines Arbeitsaggregats einer Gleisbaumaschine eingebracht werden. Auf diese Weise werden definierte Vibrationen emittiert, wobei der Einbringungsort und entsprechende Vibrationsparameter genau bekannt sind. Eine Kalibrierung der Überwachungseinrichtung erfolgt dabei im Zuge einer Gleisbearbeitung mittels der Gleisbaumaschine.

Dabei sieht eine Verbesserung vor, dass Steuerungsdaten und/oder Arbeitsparameter der Gleisbaumaschine an die Auswerteeinrichtung übermittelt werden und dass diese mit den Messdaten abgestimmt werden. Beispielsweise ist durch einen wiederholten Abgleich der Messdaten mit den Steuerungsdaten bzw. Arbeitsparametern die Beschaffenheit einer Gleisbettung entlang der Gleisstrecke evaluierbar. Zudem ist damit die Durchführung von Arbeitseinsätzen der Gleisbaumaschine überwachbar.

Das erfindungsgemäße System zur Durchführung eines der beschriebenen Verfahren umfasst die Überwachungseinrichtung, für die der sich entlang der Gleisstrecke erstreckende Sensor Messdaten liefert. Des Weiteren umfasst das System ein Schienenfahrzeug, das zum Erfassen von mittels des Schienenfahrzeugs erzeugter Vibrationen sowie von Positionsdaten eingerichtet ist und eine Auswerteeinrichtung, die zum Abgleichen der Messdaten mit den vom Schienenfahrzeug erfassten Daten eingerichtet ist, um für die Gleisstrecke eine Charakteristik der Vibrationsübertragung als eine in der Überwachungseinrichtung abzuspeichernde Übertragungsfunktion abzuleiten. Mit dem System werden die Messungen der Überwachungseinrichtung mit den während eines Befahrens der Gleisstrecke eingebrachten Vibrationen und Positionen des Schienenfahrzeugs abgeglichen.

Eine einfache Ausprägung des Systems sieht vor, dass das Schienenfahrzeug einen Beschleunigungssensor zum Erfassen der erzeugten Vibrationen umfasst. Beispielsweise liefert ein an einer Radachse angebrachter Beschleunigungssensor Daten (Beschleunigung, Frequenz, Amplitude etc.) der mittels eines Rads in das Gleis eingebrachten Vibrationen.

Für die Positionsbestimmung ist es vorteilhaft, wenn das Schienenfahrzeug einen GNSS-Empfänger zum Erfassen einer Position des Schienenfahrzeugs umfasst.

Um die erfassten Daten offline abgleichen zu können ist es sinnvoll, wenn das Schienenfahrzeug einen Zeitgeber umfasst, wenn die Überwachungseinrichtung einen Zeitgeber umfasst und wenn beide Zeitgeber für einen synchronen Betrieb eingerichtet sind.

Vorteilhafterweise ist das Schienenfahrzeug eine Gleisbaumaschine, welche zur Erzeugung bestimmter Vibrationsemissionen eingerichtet ist. Dann ist die Bearbeitung der Gleisstrecke mittels der Gleisbaumaschine für die Bestimmung der Charakteristik der Vibrationsübertragung auf den Sensor nutzbar.

Für das Emittieren bestimmter Vibrationen ist es von Vorteil, wenn die Gleisbaumaschine ein Arbeitsaggregat umfasst, welches einen Vibrationserzeuger aufweist und insbesondere als Stopfaggregat oder Stabilisierungsaggregat ausgebildet ist. Die Erfassung der emittierten Vibrationen kann hierbei über eine Auswertung von Steuerungsdaten bzw. Arbeitsparameter erfolgen.

Oft sind entlang von Gleisstrecken Lichtwellenleiter zur Datenübertragung verlegt. Deshalb ist in einer vorteilhaften Ausprägung des Systems vorgesehen, dass der Sensor einen Lichtwellenleiter umfasst. Somit ist die bereits vorhandene Infrastruktur nutzbar.

Gemäß einer weiteren Verbesserung umfasst das Schienenfahrzeug Messeinrichtungen zum Detektieren von Gleisobjekten. Das ist insbesondere dann von Bedeutung, wenn die Position bzw. Beschaffenheit der Gleisobjekte die Vibrationsübertragung von einer Vibrationsquelle zum Sensor beeinflussen. Gegebenenfalls werden die erfassten Objektdaten in die Bestimmung der Übertragungscharakteristik einbezogen.

Kurze Beschreibung der Zeichnungen

Die Erfindung wird nachfolgend in beispielhafter Weise unter Bezugnahme auf die beigefügten Figuren erläutert. Es zeigen in schematischer Darstellung:

Fig. 1    Querschnitt einer Gleisstrecke und eines Schienenfahrzeugs
Fig. 2    Querschnitt einer Gleisstrecke und einer Gleisbaumaschine
Fig. 3    Vibrationsemission einer Gleisbaumaschine
Fig. 4    Vibrationsemission eines Zuges
Fig. 5    Ermittlung der Übertragungsfunktion
Fig. 6    Zeit-Weg-Diagramme und Übertragungsfunktion

Beschreibung der Ausführungsformen

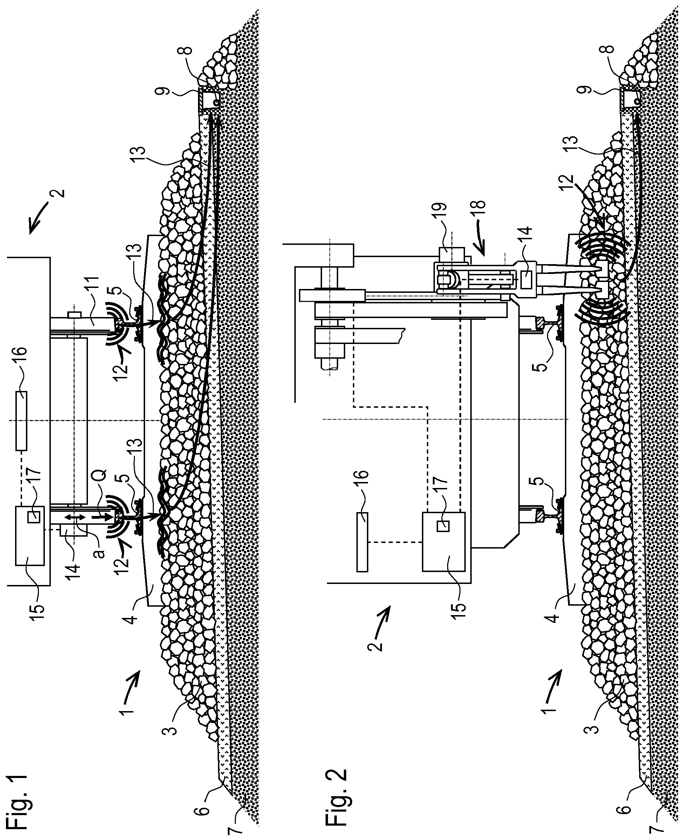

Fig. 1 zeigt einen Querschnitt einer Gleisstrecke 1, die von einem Schienenfahrzeug 2 befahren wird. Die Gleisstrecke 1 weist die typische Form eines Eisenbahndamms mit einem Gleisschotterbett 3 auf. Im Gleisschotterbett 3 ist ein Gleisrost gelagert, bestehend aus Schwellen 4 und darauf befestigten Schienen 5. Diese Anordnung bildet den Oberbau der Gleisstrecke 1. Unter dem Gleisschotterbett 3 ist oft als Unterbau eine Zwischenschicht 6 und eine Drainageschicht 7 vorgesehen. Neben dieser Bettung erstreckt sich entlang der Gleisstrecke 1 ein Sensor 8. Dabei handelt es sich beispielsweise um einen in einem Kabeltrog 9 geführten Lichtwellenleiter, der für die vorliegende Erfindung als Akustiksensor genutzt wird. Entlang der Strecke 1 sind gewöhnlich weitere Gleisobjekte 10 wie Balisen, Signaleinrichtungen etc. angeordnet.

Während des Befahrens der Gleisstrecke 1 überträgt das Schienenfahrzeug 2 über seine Räder 11 ungleichmäßige Kräfte Q auf die Schienen 5, wobei diese Kräfte Q über den Oberbau auf den Unterbau und letztlich in den Untergrund abgeleitet werden. Auf diese Weise emittiert das Schienenfahrzeug 2 Vibrationen 12, die sich als Deformationen der Übertragungselemente 3-7 in Form von Wellen dynamisch fortpflanzen. Durch diese Vibrationsübertragung 13 wird auch der im Kabeltrog 9 befindliche Sensor 8 in Schwingung versetzt.

Die eingeleiteten Vibrationen 12 werden beispielsweise mittels eines an einer Achse angeordneten Beschleunigungssensors 14 in einer Erfassungseinrichtung 15 dies Schienenfahrzeugs 2 erfasst. Vibrationswerte a, Q werden in der Erfassungseinrichtung 15 mit Positionsdaten x verknüpft, die beispielsweise mittels eines GNSS-Empfängers 16 ermittelt werden. Günstigerweise umfasst die Erfassungseinrichtung 15 einen Zeitgeber 17, um die erfassten Daten mit einem Zeitstempel zu versehen.

In Fig. 2 ist ein vergleichbarer Vorgang mit einem als Gleisbaumaschine ausgebildeten Schienenfahrzeug 2 dargestellt. Konkret handelt es sich um eine Gleisstopfmaschine, die als Arbeitsaggregat 18 ein in das Gleisschotterbett 3 absenkbares Stopfaggregat umfasst. Mittels dieses Arbeitsaggregats 18 werden gezielt vorgegebene Vibrationen 12 emittiert. Eine Vibrationsübertragung 13 über den Gleisrost entfällt dabei. Vibrationswerte werden entweder aus Steuerungsdaten und Arbeitsparameters der Gleisbaumaschine abgeleitet oder mittels eines Beschleunigungssensors 14 detektiert. Insbesondere die Arbeitsparameter eines im Arbeitsaggregat 18 wirkenden Vibrationserzeugers 19 liefern nutzbare Vibrationswerte. So gibt etwa die Umdrehungsgeschwindigkeit eines zur Vibrationserzeugung eingesetzten Exzenterantriebs die Frequenz der ins Gleis eingebrachten Vibration 12 an.

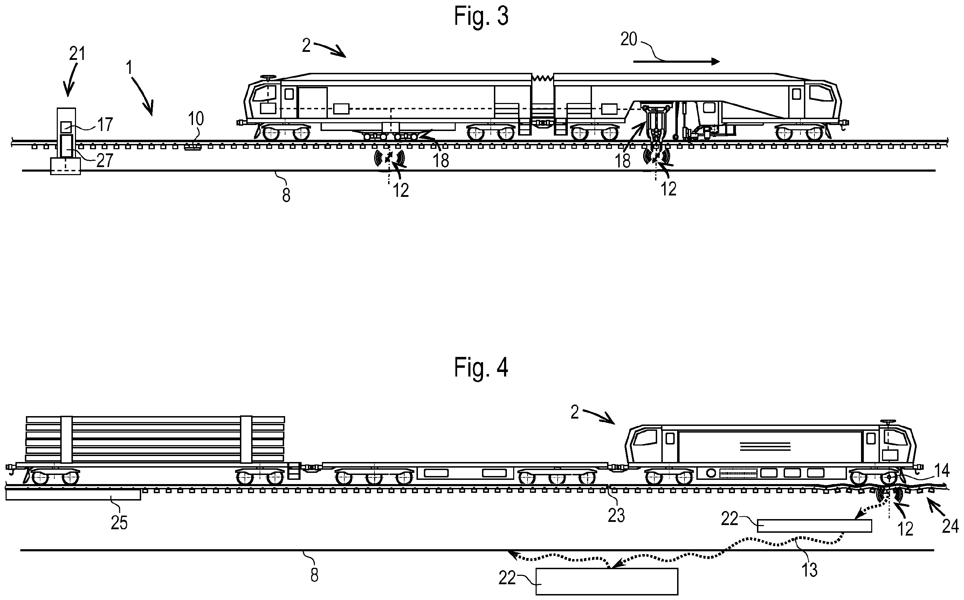

Die Gleisbaumaschine ist in Fig. 3 in einer Seitenansicht dargestellt. Als zusätzliches Arbeitsaggregat 18 ist hier in Arbeitsrichtung 20 hinter dem Stopfaggregat ein Stabilisationsaggregat angeordnet. Mittels des Stabilisationsaggregats werden definierte horizontale Vibrationen 12 über die Schienen 5 und die Schwellen 4 in die Bettung eingeleitet. An einer gut zugänglichen Stelle der Gleisstrecke 1 ist der Sensor 8 mit einer Überwachungseinrichtung 21 verbunden. Falls der Sensor 8 ein Lichtwellenleiter zur Datenübertragung ist, reicht eine ungenutzte Lichtleiterfaser aus, um eine Verbindung mit der Überwachungseinrichtung 21 herzustellen.

Die mittels der Gleisbaumaschine auf den Sensor 8 übertragenen Vibrationen 12 werden mittels der Überwachungseinrichtung 21 registriert. Dabei ist zu beachten, dass ein Lichtwellenleiter gewöhnlich lose neben anderen Leitern im Kabeltrog 9 verlegt ist. In die Bettung eingeleitete Vibrationen 12 übertragen sich demnach ungleichmäßig auf den Lichtwellenleiter. Konkret bestimmen die dynamischen Eigenschaften der Übertragungselemente 3-7 und des Kabeltrogs 9 eine Übertragungsfunktion T zwischen den eingeleiteten Vibrationen 12 und den registrierten Schwingungen des Lichtwellenleiters.

Die Position der Gleisbaumaschine ist bekannt, weil die Bearbeitung des Gleises ortsabhängig erfolgt. Beispielsweise wird eine Kilometrierung des Gleises herangezogen, um eine Bearbeitungsstelle zu definieren. Zur Erfassung der momentanen Position kommt zum Beispiel ein Odometer oder ein GNSS-Empfänger 16 zum Einsatz. Auch eine Ortsbestimmung mittels erfasster Gleisobjekte 10 ist sinnvoll. Dazu sind beispielsweise an der Gleisbaumaschine Laserscanner angeordnet, um das Gleis und seine Umgebung berührungslos abzutasten.

In Fig. 4 befährt ein als Zug ausgebildetes Schienenfahrzeug 2 eine Gleistrecke 1. Beispielsweise zieht eine Lokomotive einen unbeladenen und einen beladenen Waggon. Zumindest eine Achse der Lokomotive weist einen Beschleunigungssensor 14 zur Erfassung von in das Gleis emittierten Vibrationen 12 auf. Örtliche Einbauten 22 können zu Abschirmungen oder Reflexionen der eingebrachten Vibrationen 12 führen. Die gesamte Übertragungsfunktion T ist hier durch eine komplexe, dreidimensionale Überlagerung der Schienenanregung an vielen Stellen (Radaufstandspunkten) und den zugehörigen einzelnen Übertragungsrelationen bis zum Ort der Schwingungsmessung (Lichtwellenleiter) bestimmt.

Dabei hat jeder Zug ein spezifisches Emissionsmuster, welches aus der Fahrgeschwindigkeit und der Zusammensetzung des Zuges resultiert. Im Beispiel gemäß Fig. 4 ist das Emissionsmuster durch die hart gefederte Lokomotive, die geringe Belastung durch den unbeladenen Waggon, die erhöhte Belastung durch den beladenen Waggon sowie gegebenenfalls durch Flachstellen auf Radreifen etc. charakterisiert. An den Radaufstandspunkten werden die Schienen 5 mit dem Emissionsmuster belastet, wobei sich dieses mit dem Zug entlang der Gleisstrecke 1 mitbewegt.

Imperfektionen des Gleises, wie z.B. Riffelbildung am Schienenkopf, Schienenbruch 23, Welligkeit 24 des Gleises, Hohllagen, defekte Schwellen 4 oder Schienenbefestigungen etc. sind ortsfeste Erschütterungsquellen. Damit werden Vibrationen angeregt, wenn sie vom Zug befahren werden. Auch Unterschiede bei der Oberbaukonstruktion (Schottergleis, feste Fahrbahn 25) und Bauwerke 26 (Brücken, Tunnel etc.) entlang der Gleisstrecke 1 spielen hier eine Rolle.

Jede einzelne Erschütterung eines Radaufstandspunktes wird auf einen betrachteten Messpunkt im Lichtwellenleiter übertragen. Die sich ergebende Übertragungsfunktion T hängt von sämtlichen Elementen 3-7, 9, 22-26 ab, welche die Vibrationsübertragung 13 bestimmen. Deswegen misst der Lichtwellenleiter am Messpunkt keine physikalische Einheit, die eine konkrete Schwingung repräsentiert. Stattdessen gibt der Lichtwellenleiter an die Überwachungseinrichtung 21 ein Signal aus, das alle überlagerte Vibrationen 12 beschreibt, die am betrachteten Messpunkt auf den Lichtwellenleiter wirken. Die Übertragungsfunktion T bildet diesen komplexen Zusammenhang ab und dient zum Kalibrieren des Systems.

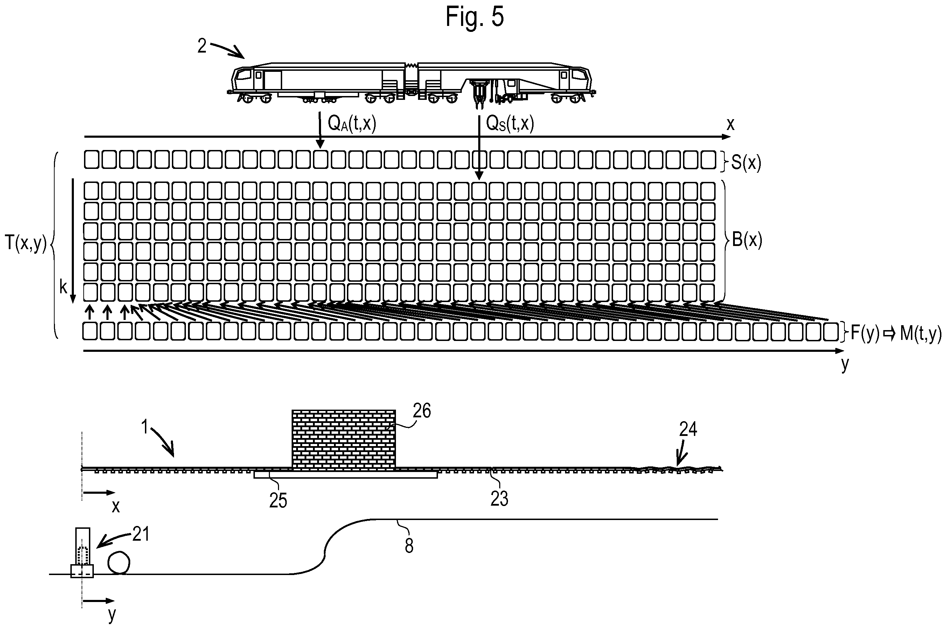

Anhand Fig. 5 wird die Bestimmung der Übertragungsfunktion T mittels einer Gleisbaumaschine beschrieben. Ein entlang der Schienen 5 gemessener Weg x definiert die Position der Gleisbaumaschine am Gleis. Als Ausgangspunkt ist beispielsweise die Stelle festgelegt, wo die Überwachungseinrichtung 21 mit dem Sensor 8 verbunden ist. Von dort aus erstreckt sich der Sensor 8 mit einem abweichenden Weg y bis zu einem betrachteten Messpunkt. Beispielsweise verläuft ein Kabeltrog 9 nicht immer parallel zum Gleis oder es sind Kabelschlaufen für einen Längenausgleich vorgesehen.

Die Gleisbaumaschine umfasst zwei Arbeitsaggregate 18, die jeweils eine über der Zeit t veränderliche Kraft $Q_A(t, x)$, $Q_s(t, x)$ auf das Gleis ausüben und auf diese Weise Vibrationen 12 erzeugen. Ein Stabilisierungsaggregat übt dabei eine Kraft $Q_A(t, x)$ auf die Schienen 5 aus und ein Stopfaggregat übt eine Kraft Qs(t, x) direkt auf das Gleisschotterbett 3 aus.

Die Übertragungsfunkton T besteht aus drei Komponenten, nämlich aus einer Transferfunktion Schienenrost S(x), einer Transferfunktion Bettung B(x) und einer Transferfunktion Sensor F(y):

$$T(x, y) = \begin{pmatrix} S(x) \\ B(x) \\ F(y) \end{pmatrix} \quad \text{oder} \quad T(t) = \begin{pmatrix} S(t) \\ B(t) \\ F(t) \end{pmatrix}$$

Der Weg x dient dabei als Variabel, mit der das Übertragungssystem entlang der Schiene 5 diskretisiert wird. Entlang des Sensors 8 erfolgt eine Diskretisierung mittels der Variabel y. In entsprechender Weise können die Transferfunktionen zeitabhängig erfasst werden, wobei bekannt ist, zu welcher Zeit t ein Arbeitsaggregat 18 eine Vibration 12 an welchem Ort emittiert. Der Ortsbezug erfolgt somit über Zeitangaben. Dabei umfasst die Überwachungseinrichtung 21 einen Zeitgeber 17, der mit einem Zeitgeber 17 der Gleisbaumaschine synchronisiert ist.

Die Transferfunktion Schienenrost S(x) beschreibt die Eigenschaften der Schwingungsübertragung der Schienen 5 und der Schwellen 4 abhängig vom Weg x:

$$S(x) = \begin{pmatrix} s_1(x) & s_2(x) & ... \end{pmatrix}$$

Die Parametrisierung erfolgt mittels Werte $s_s$ am jeweils betrachteten Messpunkt, wobei insbesondere Effekte der Schienenoberfläche, Weichenbauteile oder Schienenbrüche identifiziert und parametrisiert werden.

Die Transferfunktion Bettung B(x) beschreibt die Eigenschaften der Schwingungsübertragung ab der Schwellenunterkante bis zum Sensor 8:

$$B(x) = \begin{pmatrix} b_{1,1}(x) & b_{1,2}(x) & ... \\ \vdots & \vdots & ... \\ b_{k,1}(x) & b_{k,2}(x) & \ddots \end{pmatrix}$$

Mit der Zeilenanzahl k der Matrix wird die Bettung von der Schwellenunterkante bis zum Sensor 8 diskretisiert. In den Zeilen werden jene Parameter, welche die Schwingungsübertragung beeinflussen (Ausbreitungsgeschwindigkeit, Dämpfung, Reflexion...) identifiziert und parametrisiert.

Die Transferfunktion Sensor F(y) beschreibt beispielsweise die Eigenschaften einer Lichtleiterfaser:

$$F(y) = \begin{pmatrix} f_1(y) & f_2(y) & ... \end{pmatrix}$$

Die Parametrisierung erfolgt mittels Werte $f_f$ am jeweils betrachteten Messpunkt, wobei die einzelnen Parameterwerte beispielsweise eine Eigenfasersignaldämpfung, Ortsrelationen ($y \rightarrow x$), Kontakteigenschaften der Lichtleiterfaser mit der Transferfunktion Bettung B(x) sowie Kabeleigenschaften (Armierung etc.) angeben.

Das jeweilige Arbeitsaggregat 18 wird mit einem Vektor A beschrieben:

$$A = \begin{pmatrix} Q \\ a_1 \\ \vdots \\ a_m \end{pmatrix}$$

Die Werte $a_a$ beschreiben Parameter der emittierten Vibration 12. Dasselbe gilt für eine Achse eines Zuges, wobei hier als Kraft Q die statische Radlast angegeben ist. Die Parameterwerte $a_a$ geben beispielsweise eine Polygonisierung, Flachstellen, das Radprofil etc. an. Die Wirkung eines ganzen Zuges auf das Gleis zum Zeitpunkt t beschreibt eine Matrix Z(t):

$$Z(t) = \begin{pmatrix} A_1 & \cdots & A_n \\ x_1 & \cdots & x_n(t) \end{pmatrix}$$

Für die Ermittlung der Übertragungsfunktion T wird die Anregung des Gleises durch das jeweilige Arbeitsaggregat 18 oder durch eine Achse mit Vibrationserfassung herangezogen. Dabei wird jeweils die wirkende Kraft Q über der Zeit t oder über der entsprechenden Stelle entlang der Schienen 5 angegeben:

$$Q(t) \text{ oder } Q(x)$$

Eine Messung mittels der Überwachungseinrichtung 21 für einen betrachteten Messpunkt entlang des Sensors 8 ergibt eine Matrix M(t, y):

$$M(t,y) = \begin{pmatrix} m_1 \\ \vdots \end{pmatrix}$$

Dabei werden entlang der Positionen bzw. des Weges y die jeweiligen Werte $m_m$ gemessen und den entsprechenden Parametern der eigebrachten Vibrationen 12 zugeordnet. Entsprechende Parameter sind beispielsweise Amplituden, Frequenzen, Dehnungen etc.

Die eigentliche Bestimmung der Übertragungsfunktion T erfolgt in einer Auswerteeinrichtung 27, die beispielsweise in der Überwachungseinrichtung 21, einer Systemzentrale oder einem an die Überwachungseinrichtung 21 anschließbaren Computer eingerichtet ist. Mittels dieser Auswerteeinrichtung 27 werden erfasste Daten der emittierte Vibrationen 12 mit den Messwerten des Sensors 8 abgestimmt. Beispielsweise wird beim Befahren der Gleisstrecke 1 mittels eines Zuges zum Zeitpunkt t die entsprechende Zugmatrix Z(t) herangezogen. Die sich überlagernden emittierten Vibrationen 12 (Emissionsmuster) werden mit der Übertragungsfunktion T auf die Schienen 5 übertragen und als Matrix M(t, y) gemessen:

$$Z(t) \xrightarrow{T} M(t,y)$$

Ohne definierte Anregung des Systems wäre die Übertragungsfunktion T nur ungenau mittels Musterabgleich bestimmbar. Dabei könnten die Anregungen eines Zuges in Form einer Zugmatrix Z(t) lediglich empirisch mit der bei einer Messung erhaltenen Matrix M(t) in Übereinstimmung gebracht werden.

Bei einer definierten Anregung (Gleisbaumaschine oder Zug mit gemessenen Achsbeschleunigungen) sind die Eigenschaften der Übertragungsfunktion T hingegen hinreichend genau bestimmbar:

$$Q(t,x) \xrightarrow{T} M(t,y)$$

Durch die entsprechende Parametrisierung der Übertragungsfunktion T erfolgt eine Kalibrierung der Überwachungseinrichtung 21.

Bei wiederholten Messungen mit definierten und undefinierten Anregungen kann die Genauigkeit der Übertragungsfunktion T mittels statistischer Methoden verbessert werden. Konkret können über statistische Auswertungen Konfidenzen zu den Parametern der Übertragungsfunktion T erstellt werden. Wenn bei einer späteren Messung Abweichungen beobachtet werden, sind entsprechende Rückschlüsse auf Änderungen des Systems ableitbar (Flachstellen an Radreifen, Polygonbildung, Schienenbruch etc.).

Ohne derartige Systemänderungen ist die Übertragungsfunktion T über kurze Zeiträume (Dauer einer Zugfahrt bzw. wenige Tage) hinweg als unveränderlich anzusehen. Auch das Emissionsmuster eines jeweiligen Zuges wird zumindest während einer Fahrt als unveränderlich angenommen. Diese Annahmen führen unter Anwendung statistischer Methoden durch Analyse der zahlreichen Fahrten im Bahnbetrieb zu eindeutigen Lösungen, welche die Genauigkeit der Einzelmessungen weit übertreffen. Die ortsfeste Charakteristik der Gleisstrecke 1 wird auf diese Weise immer genauer bekannt. Auch das Emissionsmuster eines Zuges ist über die ganze beobachtete Gleisstrecke 1 verfolgbar und durch statistische Methoden relativ genau ermittelbar. Bei der Beurteilung der Zugcharakteristik lassen sich Ausreißer sofort detektieren.

Lediglich über längere Zeiträume hinweg verändern sich die Charakteristika, sodass eine erneute Kalibrierung des Systems sinnvoll ist. Auslöser solcher Veränderungen können saisonale Schwankungen der Bodeneigenschaften, Bauarbeiten, große Wetterereignisse sowie Verschleißerscheinungen des Gleises (Riffelbildung auf Schienen 5, schlagendes Weichenherz, Schotterabnützung etc.) sein. Eine Überwachung dieser langfristigen Veränderungen erfolgt mittels Zeitreihen und wiederholten Kalibrationen. Auf diese Weise lassen sich langsame Veränderungen verfolgen. Abrupte Änderungen der Gleischarakteristik (z.B. Schienenbruch) fallen hingegen sofort auf.

Mit der Übertragungsfunktion T ergeben sich aus den gemessenen Signalen des Sensors 8 eindeutige Überwachungsergebnisse. Charakteristische Emissionsmuster eines fahrenden Zuges sind ebenso erkennbar wie Zustandsänderungen der Gleisstrecke 1 oder ortsfeste Erschütterungsquellen.

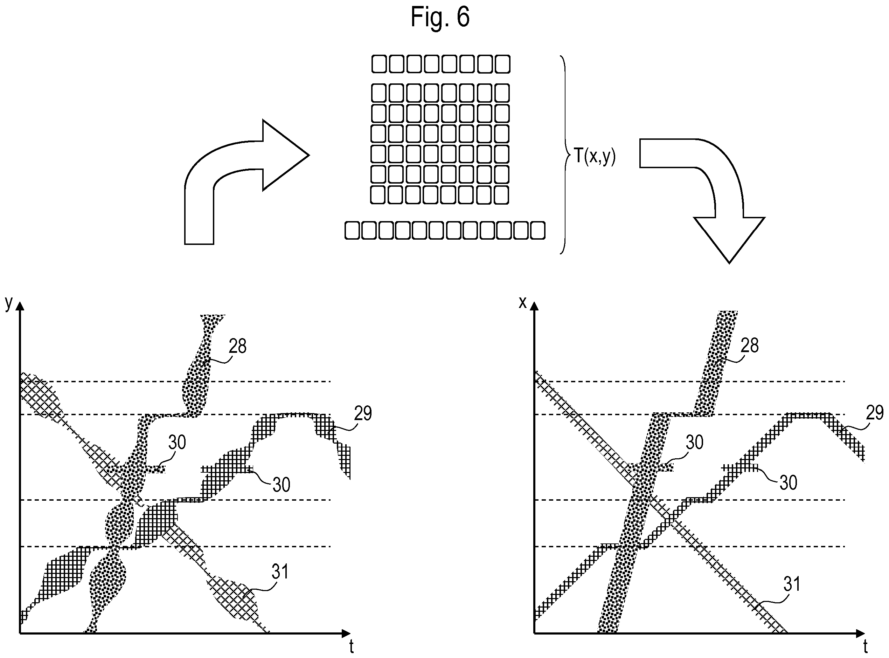

Fig. 6 zeigt auf der linken Seite in einem Zeit-Weg-Diagramm jene Messsignale, welche zunächst mittels des Sensors 8 in der Überwachungseinrichtung 21 erfasst werden. Der entsprechende Gleisabschnitt 1 ist eine zweigleisige Eisenbahnstrecke. Auf der Abszisse ist die Zeit t aufgetragen und die Ordinate gibt die Positionen y der Messpunkte entlang des Sensors 9 wieder.

Durch die beschriebene mathematische Transformation mittels der Übertragungsfunktion T werden örtliche Übertragungsrelationen kompensiert. Damit ergibt sich auf der rechten Seite ein Zeit-Weg-Diagramm mit kalibrierten Messsignalen, mittels derer unverfälschte Emissionsmuster von Zügen entlang der Gleisstrecke 1 erfassbar sind. Durch statistische Auswertungen ist auch die Charakteristik ortsfester Erschütterungsquellen ermittelbar.

Beispielsweise zeigt ein erster Musterverlauf 28 die Bewegung eines Emissionsmusters eines schnellen Zuges, der an einem langsamen Zug (zweiter Musterverlauf 29) bei einer ersten Haltestelle (horizontaler Verlauf) vorbeifährt. Ein horizontaler Balken 30 in den beiden Musterverläufen 28, 29 zeigt eine örtliche Imperfektion (z.B. Schienenbruch) des betreffenden Gleises an. Am Nachbargleis bewegt sich ein entgegenkommender Zug, der in keiner Haltestelle stehen bleibt (dritter Musterverlauf 31).

Somit liegt der Vorteil einer Kalibrierung mittels Übertragungsfunktion T darin, dass die erkannten örtlichen Übertragungsrelationen kompensiert werden, um Emissionsmuster von Zügen sowie Charakteristiken ortsfester Erschütterungsquellen interpretierbar und verfolgbar zu machen.

**Patentansprüche**

1. Verfahren zum Überwachen einer Gleisstrecke (1) mittels einer Überwachungseinrichtung (21), die mit einem sich entlang der Gleisstrecke (1) erstreckenden Sensor (8) verbunden ist, wobei der in Vibration versetzte Sensor (8) Messdaten für die Überwachungseinrichtung (21) liefert wobei die Gleisstrecke (1) mit einem Schienenfahrzeug (2) befahren wird und dabei Vibrationen (12) mit bekannten Vibrationswerten (a, $Q_A$, $Q_S$) in die Gleisstrecke (1) eingebracht und auf den Sensor (8) übertragen werden, Positionsdaten (x) des Schienenfahrzeugs (2) erfasst werden und mittels einer Auswerteeinrichtung (27) aus den bekannten Vibrationswerten (a, $Q_A$, $Q_S$), den vom Sensor (8) gelieferten Messdaten und den Positionsdaten (x) für die Gleisstrecke (1) eine Charakteristik der Vibrationsübertragung (13) abgeleitet wird, und wobei die Charakteristik der Vibrationsübertragung (13) als eine Übertragungsfunktion (T) in der Überwachungseinrichtung (21) abgespeichert wird.

2. Verfahren nach Anspruch 1, wobei die Messdaten aus Signalen eines Lichtwellenleiters abgeleitet werden, insbesondere mittels verteilter akustischer Erfassung über mindestens eine Lichtleiterfaser.

3. Verfahren Anspruch 1 oder 2, wobei ein Zeitgeber (17) des Schienenfahrzeugs (2) und ein Zeitgeber (17) der Überwachungseinrichtung (21) synchronisiert werden und dass die erfassten Daten zeitbezogen abgespeichert werden.

4. Verfahren nach einem der Ansprüche 1 bis 3, wobei die Position des Schienenfahrzeugs (2) mittels eines GNSS-Empfängers (16) erfasst wird.

5. Verfahren nach einem der Ansprüche 1 bis 4, wobei die Vibrationen (12) mittels eines Arbeitsaggregats (18) einer Gleisbaumaschine eingebracht werden.

6. Verfahren nach Anspruch 5, wobei Steuerungsdaten und/oder Arbeitsparameter der Gleisbaumaschine an die Auswerteeinrichtung (27) übermittelt werden und dass diese mit den Messdaten abgestimmt werden.

7. System zur Durchführung eines Verfahrens nach einem der Ansprüche 1 bis 6, mit einer Überwachungseinrichtung (21), mit einem sich entlang einer Gleisstrecke (1) erstreckenden Sensor (8), der dazu eingerichtet ist, Messdaten für die Überwachungseinrichtung (21) zu liefern, mit einem Schienenfahrzeug (2), das zum Befahren der Gleisstrecke (1), zum Erfassen von Vibrationwerten von mittels des Schienenfahrzeugs (2) erzeugter Vibrationen (12) sowie von Positionsdaten des Schienenfahrzeugs (2) eingerichtet ist, und mit einer Auswerteeinrichtung (27) die zum Abgleichen der Messdaten mit den vom Schienenfahrzeug (2) erfassten Vibrationswerten und Positionsdaten und zum Ableiten einer Charakteristik der Vibrationsübertragung (13) für die Gleisstrecke (1) als Übertragungsfunktion ausgebildet ist, wobei die Überwachungseinrichtung (21) dazu ausgebildet ist, die Übertragungsfunktion zu speichern.

8. System nach Anspruch 7, wobei das Schienenfahrzeug (2) einen Beschleunigungssensor (14) zum Erfassen der erzeugten Vibrationen (12) umfasst.

9. System nach Anspruch 7 oder 8, wobei das Schienenfahrzeug (2) einen GNSS-Empfänger (16) zum Erfassen einer Position des Schienenfahrzeugs (2) umfasst.

10. System nach einem der Ansprüche 7 bis 9, wobei das Schienenfahrzeug (2) einen Zeitgeber (17) umfasst, dass die Überwachungseinrichtung (21) einen Zeitgeber (17) umfasst und dass beide Zeitgeber (17) für einen synchronen Betrieb eingerichtet sind.

**11.** System nach einem der Ansprüche 7 bis 10, wobei das Schienenfahrzeug (2) eine Gleisbaumaschine ist, welche zur Erzeugung bestimmter Vibrationsemissionen eingerichtet ist.

**12.** System nach Anspruch 11, wobei die Gleisbaumaschine (2) ein einen Vibrationserzeuger (19) aufweisendes Arbeitsaggregat (18), insbesondere ein Stopfaggregat oder ein Stabilisierungsaggregat umfasst.

**13.** System nach einem der Ansprüche 7 bis 12, wobei der Sensor (8) einen Lichtwellenleiter umfasst.

**14.** System nach einem der Ansprüche 7 bis 13, wobei das Schienenfahrzeug (2) Messeinrichtungen zum Detektieren von Gleisobjekten (10) umfasst.


**Claims**

**1.** A method for monitoring a track line (1) by means of a monitoring device (21) which is connected to a sensor (8) extending along the track line (1), wherein the sensor (8) which is set in vibration delivers measurement data for the monitoring device (21), wherein a rail vehicle (2) travels on the track line (1), during which vibrations (12) having known vibration values (a, $Q_A$, $Q_S$) are introduced into the track line (1) and transmitted to the sensor (8), that position data (x) of the rail vehicle (2) are recorded, and that, by means of an evaluation device (27), a characteristic of the vibration transmission (13) is derived from the known vibration values (a, $Q_A$, Qs), the measurement data delivered by the sensor (8) and the position data (x) for the track line (1) and wherein the characteristic of the vibration transmission (13) is stored as a transmission function (T) in the monitoring device (21).

**2.** A method according to claim 1, wherein the measurement data are derived from signals of a fibre optic cable, in particular by means of distributed acoustic sensing via at least one optical fibre.

**3.** A method according to one of claims 1 or 2, wherein a timer (17) of the rail vehicle (2) and a timer (17) of the monitoring device (21) are synchronized, and that the recorded data are in a stored time-related manner.

**4.** A method according to one of claims 1 to 3, wherein the position of the rail vehicle (2) is recorded by means of a GNSS receiver (16).

**5.** A method according to one of claims 1 to 4, wherein the vibrations (12) are introduced by means of a work unit (18) of a track maintenance machine.

**6.** A method according to claim 5, wherein control data and/or work parameters of the track maintenance machine are transmitted to the evaluation device (27), and that these are coordinated with the measurement data.

**7.** A system for implementing a method according to one of claims 1 to 6, including a monitoring device (21) for which measurement data are supplied by a sensor (8) extending along a track line (1), with a rail vehicle (2) configured for travelling on the track line (1), for the recording of vibration values of vibrations (12) generated by means of the rail vehicle (2) as well as of position data of the rail vehicle (2), and with an evaluation device (27) configured for coordinating the measurement data with vibration values and position data recorded by the rail vehicle (2) in order to derive for the track line (1) a characteristic of the vibration transmission (13) configured as a transmission function (T) wherein the monitoring device (21) is configured to store the transmission function (T).

**8.** A system according to claim 7, wherein the rail vehicle (2) comprises an acceleration sensor (14) for recording the generated vibrations (12).

**9.** A system according to claim 7 or 8, wherein the rail vehicle (2) comprises a GNSS receiver (16) for recording a position of the rail vehicle (2).

**10.** A system according to one of claims 7 to 9, wherein the rail vehicle (2) comprises a timer (17), that the monitoring device (21) comprises a timer (17), and that both timers (17) are configured for synchronous operation.

**11.** A system according to one of claims 7 to 10, wherein the rail vehicle (2) is a track maintenance machine which is configured for generating specific vibration emissions.

**12.** A system according to claim 11, wherein the track maintenance machine (2) comprises a work unit (18), in particular a tamping unit or a stabilizing unit, which has a vibration generator (19).

**13.** A system according to one of claims 7 to 12, wherein the sensor (8) comprises a fibre optic cable.

**14.** A system according to one of claims 7 to 13, wherein the rail vehicle (2) comprises measuring devices for detecting track objects (10).

**Revendications**

**1.** Procédé de surveillance d'un trajet ferroviaire (1) au moyen d'un dispositif de surveillance (21) qui est connecté à un capteur (8) s'étendant le long du trajet ferroviaire (1), dans lequel le capteur (8) mis en vibration fournit des données de mesure pour le dispositif de surveillance (21), **dans lequel** le trajet ferroviaire (1) est parcouru avec un véhicule ferroviaire (2), et des vibrations (12) avec des valeurs de vibration connues (a, $Q_A$, Qs) sont introduites ce faisant dans le trajet ferroviaire (1) et transmises au capteur (8), des données de position (x) du véhicule ferroviaire (2) sont détectées et une caractéristique de la transmission de vibrations (13) est dérivée des valeurs de vibration connues (a, $Q_A$, Qs), des données de mesure fournies par le capteur (8) et des données de position (x) pour le trajet ferroviaire (1) au moyen d'un dispositif d'évaluation (27), et **dans lequel** la caractéristique de la transmission de vibrations (13) est mémorisée en tant que fonction de transmission (T) dans le dispositif de surveillance (21).

**2.** Procédé selon la revendication 1, **dans lequel** les données de mesure sont dérivées de signaux d'un guide d'ondes optiques, notamment au moyen d'une détection acoustique distribuée sur au moins une fibre optique.

**3.** Procédé selon la revendication 1 ou 2, **dans lequel** un temporisateur (17) du véhicule ferroviaire (2) et un temporisateur (17) du dispositif de surveillance (21) sont synchronisés et que les données détectées sont mémorisées par rapport au temps.

**4.** Procédé selon une des revendications 1 à 3, **dans lequel** la position du véhicule ferroviaire (2) est détectée au moyen d'un récepteur GNSS (16).

**5.** Procédé selon une des revendications 1 à 4, **dans lequel** les vibrations (12) sont introduites au moyen d'un module de travail (18) d'une machine de pose de voie.

**6.** Procédé selon la revendication 5, **dans lequel** des données de commande et/ou des paramètres de travail de la machine de pose de voie sont communiqués au dispositif d'évaluation (27) et que ceux-ci sont ajustés avec les données de mesure.

**7.** Système pour la réalisation d'un procédé selon une des revendications 1 à 6, avec un dispositif de surveillance (21), avec un capteur (8) s'étendant le long d'un trajet ferroviaire (1) qui est configuré pour fournir des données de mesure pour le dispositif de surveillance (21), avec un véhicule ferroviaire (2) qui est configuré pour le parcours du trajet ferroviaire (1), pour la détection de valeurs de vibration de vibrations (12) générées au moyen du véhicule ferroviaire (2) ainsi que de données de position du véhicule ferroviaire (2), et avec un dispositif d'évaluation (27) qui est réalisé pour l'ajustement des données de mesure avec les valeurs de vibration et données de position détectées par le véhicule ferroviaire (2) et pour la dérivation d'une caractéristique de la transmission de vibrations (13) pour le trajet ferroviaire (1) en tant que fonction de transmission, dans lequel le dispositif de surveillance (21) est réalisé pour mémoriser la fonction de transmission.

**8.** Système selon la revendication 7, **dans lequel** le véhicule ferroviaire (2) comprend un capteur d'accélération (14) pour la détection des vibrations générées (12).

**9.** Système selon la revendication 7 ou 8, **dans lequel** le véhicule ferroviaire (2) comprend un récepteur GNSS (16) pour la détection d'une position du véhicule ferroviaire (2).

**10.** Système selon une des revendications 7 à 9, **dans lequel** le véhicule ferroviaire (2) comprend un temporisateur (17), que le dispositif de surveillance (21) comprend un temporisateur (17) et que les deux temporisateurs (17) sont configurés pour un fonctionnement synchrone.

**11.** Système selon une des revendications 7 à 10, **dans lequel** le véhicule ferroviaire (2) est une machine de pose de voie qui est configurée pour la génération de certaines émissions vibratoires.

**12.** Système selon la revendication 11, **dans lequel** la machine de pose de voie (2) comprend un module de travail (18) présentant un générateur de vibrations (19), notamment un module de bourrage ou un module de stabilisation.

**13.** Système selon une des revendications 7 à 12, **dans lequel** le capteur (8) comprend un guide d'ondes optiques.

**14.** Système selon une des revendications 7 à 13, **dans lequel** le véhicule ferroviaire (2) comprend des dispositifs de mesure pour la détection d'objets ferroviaires (10).

Fig. 1

Fig. 2

Fig. 3

Fig. 4

Fig. 5

# Fig. 6

$T(x,y)$

EP 3 820 758 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3275763 A1
- US 20160334543 A1
- WO 2014019886 A2
- EP 3339819 A1